# EUROPÄISCHE PATENTANMELDUNG

(11) **EP 4 282 892 A1**
(43) Veröffentlichungstag der Anmeldung: **29.11.2023**
(21) Anmeldenummer: 22175371.8
(22) Anmeldetag: 25.05.2022
(51) Int. Cl.: C08G 18/20, C08G 18/30, C08G 18/42, C08G 18/76, C08J 9/00, C08J 9/08, C08J 9/14, C08G 18/18, C08G 101/00

(54) **HERSTELLUNG VON POLYURETHANSCHAUM UNTER VERWENDUNG VON KATALYSATOREN AUF BASIS IONISCHER FLÜSSIGKEITEN**

(71) Anmelder: Evonik Operations GmbH, 45128 Essen (DE)
(72) Erfinder: SUCHAN, Michael, 45894 Gelsenkirchen (DE); LINSCHEIDT, Beate Julia, 44892 Bochum (DE)
(74) Vertreter: Evonik Patent Association

(57) **Zusammenfassung**

Zusammensetzung zur Herstellung von Polyurethanen, umfassend zumindest eine PolyolKomponente, zumindest eine Polyisocyanat-Komponente, optional zumindest ein Treibmittel, optional zumindest einen Schaumstabilisator, dadurch gekennzeichnet, dass die Zusammensetzung mindestens einen Katalysator A der Struktur Q⁺X⁻ enthält, wobei Q⁺ ein Imidazoliumkation nach Formel (1), bevorzugt ein Dialkylimidazoliumkation, besonders bevorzugt ein 1,3- Dialkylimidazoliumkation ist, und wobei X⁻ ein Alkylcarboxylat der Struktur R⁶COO⁻ ist, mit R⁶ Wasserstoff oder ein linearer oder verzweigter Alkylrest mit 1 bis 16 Kohlenstoffatomen, besonders bevorzugt 1 bis 8 Kohlenstoffen.

## Beschreibung

Die vorliegende Erfindung liegt auf dem Gebiet der Polyurethane, vorzugsweise der Polyurethanschäume, insbesondere der Polyurethanhartschäume. Insbesondere betrifft sie die Herstellung von Polyurethanen unter Verwendung von Katalysatoren auf Basis ionischer Flüssigkeiten sowie Zusammensetzungen zur Herstellung solcher Polyurethane und die Verwendung dieser Polyurethane.

Die Begriffe des Polyurethans und des Polyurethanschaumes sind feststehende technische Begriffe und dem Fachmann lange bekannt.

Unter Polyurethan (PU) wird im Rahmen der vorliegenden Erfindung insbesondere ein Produkt verstanden, erhältlich durch Reaktion einer Polyisocyanat-Komponente mit einer Polyol-Komponente. Es können hierbei neben dem Polyurethan auch weitere funktionelle Gruppen, wie z.B. Uretdione, Carbodiimide, Isocyanurate, Allophanate, Biurete, Harnstoffe und/oder Uretimine, gebildet werden. Daher werden unter PU im Sinne der vorliegenden Erfindung sowohl Polyurethan als auch Polyisocyanurate, Polyharnstoffe sowie Uretdion-, Carbodiimid-, Allophanat-, Biuret- und/oder Uretimin-Gruppen enthaltende Polyisocyanat-Reaktionsprodukte verstanden. Dementsprechend wird unter Polyurethanschaum (PU-Schaum) im Rahmen der vorliegenden Erfindung ein Schaum verstanden, der als Reaktionsprodukt einer Polyisocyanat-Komponente und einer Polyol-Komponente erhalten wird. Es können auch hierbei neben dem Namen gebenden Polyurethan weitere funktionelle Gruppen, wie z.B. Allophanate, Biurete, Harnstoffe, Carbodiimide, Uretdione, Isocyanurate oder Uretimine, gebildet werden.

PU-Hartschaum ist ein feststehender technischer Begriff. Der bekannte und prinzipielle Unterschied zwischen Weichschaum und Hartschaum ist der, dass ein Weichschaum ein elastisches Verhalten zeigt und demzufolge die Verformung reversibel ist. Hartschaum wird demgegenüber dauerhaft verformt. Weiteres zu Polyurethan-Hartschaumstoffen findet man auch im "Kunststoffhandbuch, Band 7, Polyurethane", Carl Hanser Verlag, 3. Auflage 1993, Kapitel 6 beschrieben. Die Begriffe Schaum bzw. Schaumstoff werden im Sinne dieser Erfindung synonym gehandhabt, das gilt dann entsprechend auch für darauf aufbauende Begriffe wie z.B. Hartschaum bzw. Hartschaumstoff usw.

Es existiert eine Vielzahl von Katalysatoren, vorzugsweise auf Basis von Aminen oder Metallverbindungen, die für die Herstellung von Polyurethanen eingesetzt werden können. Insbesondere die zur Trimerisierung eingesetzten Katalysatoren basieren häufig auf Kaliumverbindungen und liegen in ihrer Reinform oft nicht als Flüssigkeit, sondern als Feststoff bei Raumtemperatur vor und bedürfen eines Lösungsmittels für den Einsatz zur Herstellung von Polyurethanen. Diese Lösungsmittel gehen mit verschiedenen Nachteilen einher. So sind die verwendeten Lösungsmittel unter anderem Gefahrstoffe, können zu den Emissionen des hergestellten Polyurethanschaumes beitragen oder erhöhen den Verbrauch der Polyisocyanatkomponente, da sie selber isocyanatreaktive Gruppen aufweisen.

Die konkrete Aufgabe der vorliegenden Erfindung lag vor diesem Hintergrund darin, eine Möglichkeit zur Herstellung von Polyurethanen, insbesondere von PU-Schäumen, bereitzustellen, welche auf bei Raumtemperatur (23 °C) flüssige Trimerisierungskatalysatoren zurückgreift und die Schaumeigenschaften im Vergleich zum Einsatz herkömmlicher Katalysatoren, nicht oder nur geringfügig beeinflusst.

In diesem Zusammenhang konnte im Rahmen der vorliegenden Erfindung überraschend gefunden werden, dass der Einsatz von ionischen Flüssigkeiten auf Basis von bestimmten Imidazoliumsalzen, es ermöglicht, die oben genannten Aufgabe zu lösen.

Die o.g. Aufgabe wird gelöst vom Gegenstand der Erfindung. Der Gegenstand der Erfindung ist eine Zusammensetzung zur Herstellung von Polyurethanen, umfassend zumindest eine Polyol-Komponente, zumindest eine Polyisocyanat-Komponente, optional zumindest ein Treibmittel, optional zumindest einen Schaumstabilisator, dadurch gekennzeichnet, dass die Zusammensetzung mindestens einen Katalysator A der Struktur Q⁺X⁻ enthält, wobei Q⁺ ein Imidazoliumkation nach Formel (1), bevorzugt ein Dialkylimidazoliumkation, besonders bevorzugt ein 1,3- Dialkylimidazoliumkation ist, 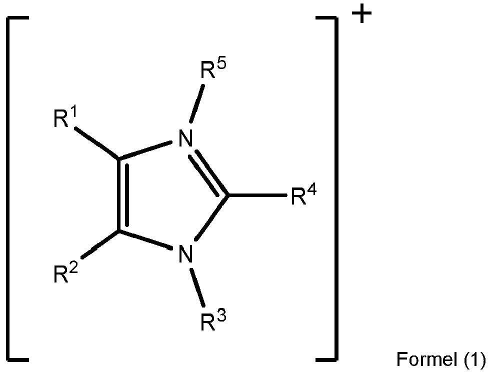 mit
R¹, R², R⁴, unabhängig voneinander, Wasserstoff oder ein Alkylrest mit 1 bis 6 Kohlenstoffen, bevorzugt Wasserstoff, Methyl oder Ethyl, besonders bevorzugt Wasserstoff,
R³, R⁵, unabhängig voneinander, ein Alkylrest mit 1 bis 6 Kohlenstoffen, bevorzugt Methyl oder Ethyl, wobei X⁻ ein Alkylcarboxylat der Struktur R⁶COO⁻ ist, mit
R⁶ Wasserstoff oder ein linearer oder verzweigter Alkylrest mit 1 bis 16 Kohlenstoffatomen, besonders bevorzugt 1 bis 8 Kohlenstoffen.

Die Bezeichnung "R¹, R², R⁴, unabhängig voneinander, ..." bedeutet, dass jeder einzelne Rest R¹, R² sowie R⁴ unabhängig voneinander jeweils Wasserstoff oder ein Alkylrest mit 1 bis 6 Kohlenstoffen sein kann, bevorzugt Wasserstoff, Methyl oder Ethyl, besonders bevorzugt Wasserstoff. R¹, R², R⁴ können also gleich oder verschieden sein.

Das gilt in analoger Weise dann entsprechend für R³, R⁵, die jeweils unabhängig voneinander ein Alkylrest mit 1 bis 6 Kohlenstoffen sein können, bevorzugt Methyl oder Ethyl. R³, R⁵ können also gleich oder verschieden sein.

Der erfindungsgemäße Gegenstand geht mit vielfältigen Vorteilen einher. So weisen die erfindungsgemäßen Katalysatoren A nur geringe Emissionen auf, können ohne Lösungsmittel verwendet werden und haben nur ein geringes Gefährdungspotential. Die erfindungsgemäßen Katalysatoren A sind bei Raumtemperatur (23 °C) flüssige Trimerisierungskatalysatoren. Trimerisierungskatalysatoren können die Reaktion von Isocyanat-Gruppen untereinander und damit die Bildung von Isocyanurat-Gruppen katalysieren.

Zudem ermöglicht der erfindungsgemäße Gegenstand vorteilhafterweise die Bereitstellung von PU, welches sämtliche Anforderungen hinsichtlich z.B. Dichte, Festigkeit oder Emissionen erfüllen kann. Vorteilhafterweise kann dies ermöglicht werden, ohne die sonstigen Eigenschaften des PU zu beeinträchtigen. Mit Blick auf die Bereitstellung von PU-Schaumstoffen können überdies besonders feinzellige, gleichmäßige und störungsarme Schaumstrukturen ermöglicht werden. So gelingt die Bereitstellung entsprechender PU-Schäume mit besonders guten Gebrauchseigenschaften. Die Erfindung ermöglicht insgesamt eine einfache Verarbeitung im Rahmen der Schaumherstellung. Die erfindungsgemäßen Katalysatoren A können wie üblich z.B. über eine der beiden Reaktionskomponenten (Polyol-Komponente oder Polyisocyanat-Komponente) in das Reaktionsgemisch eingebracht werden. Das Einbringen über die Polyol-Komponente ist dabei bevorzugt.

Der erfindungsgemäße Katalysator A hat wie oben angegeben die Struktur Q⁺X⁻. Wenn dabei Q⁺ ein 1,3-Dimethylimidazolium-Kation oder ein 1-Ethyl-3-methylimidazolium-Kation ist, so liegt eine besonders bevorzugte Ausführungsform der Erfindung vor.

Wenn X⁻ das Anion der Ameisensäure, der Essigsäure, der Propionsäure, der Pivalinsäure, der 2-Ethylhexansäure oder der Neodekansäure ist, so liegt eine weitere besonders bevorzugte Ausführungsform der Erfindung vor.

Wenn die erfindungsgemäße Zusammensetzung eine Zusammensetzung zur Herstellung von Polyurethan-Schaum ist, so liegt eine weitere besonders bevorzugte Ausführungsform der Erfindung vor. Wenn es sich bei dem Polyurethan-Schaum um einen Polyurethan-Hartschaum handelt, so liegt noch eine weitere besonders bevorzugte Ausführungsform der Erfindung vor.

Wenn die erfindungsgemäße Zusammensetzung zumindest ein physikalisches Treibmittel enthält, vorzugsweise ausgewählt aus der Gruppe bestehend aus Dimethoxymethan, Methylformiat, HFC-245fa, 1233zd, 1336mzz, Cyclopentan, Isopentan und n-Pentan, besonders bevorzugt ausgewählt aus der Gruppe bestehend aus HFC-245fa, 1233zd, Cyclopentan, Isopentan und n-Pentan, so liegt eine besonders bevorzugte Ausführungsform der Erfindung vor.

Wenn eine Komponente oder zumindest eine Komponente, wie z.B. eine chemische Verbindung, im Sinne dieser Erfindung ausgewählt ist aus einer Gruppe "bestehend aus" mehreren Komponenten, wie z.B. mehreren chemischen Verbindungen, so bedeutet dies im Sinne dieser Erfindung, dass z.B. jede einzelne der genannten Komponenten dieser Gruppe ausgewählt werden kann oder auch mehr als eine der genannten Komponenten dieser Gruppe ausgewählt werden können, also auch Mischungen aus dieser Gruppe ausgewählt werden können.

Wenn die erfindungsgemäße Zusammensetzung sich dadurch auszeichnet, dass ein oder mehrere Katalysatoren A in einer Gesamtmenge von 0,01 bis 10 Gewichtsteilen, bevorzugt 0,1 bis 8 Gewichtsteilen, bezogen auf 100 Gewichtsteile der gesamten Polyol-Komponente enthalten sind, so liegt eine besonders bevorzugte Ausführungsform der Erfindung vor.

Wenn in der erfindungsgemäßen Zusammensetzung mindestens ein Schaumstabilisator, insbesondere auf Basis eines Polyethersiloxans, in Mengen von 0,1 bis 4 Gewichtsteilen, bezogen auf 100 Gewichtsteile der gesamten Polyol-Komponente enthalten ist, so liegt eine weitere besonders bevorzugte Ausführungsform der Erfindung vor.

Ein weiterer Gegenstand der Erfindung ist ein Verfahren zur Herstellung von Polyurethan auf der Basis einer Reaktionsmischung enthaltend eine Zusammensetzung wie zuvor beschrieben oder wie in einem der Ansprüche 1 bis 8 definiert.

Wenn das erfindungsgemäße Verfahren sich dadurch auszeichnet, dass es sich um eine schaumfähige Reaktionsmischung und bei dem PU um einen Polyurethanschaum, insbesondere einen Polyurethanhartschaum handelt, so liegt eine besonders bevorzugte Ausführungsform der Erfindung vor.

Eine besonders bevorzugte PU-Hartschaumformulierung im Sinne dieser Erfindung hat die in Tabelle 1 genannte Zusammensetzung:

**Tabelle 1: Zusammensetzung einer bevorzugten PU-Schaumformulierung**

| **Komponente** | Gewichtsteile |
|---|---|
| Polyol-Komponente | >0 bis 100 |
| Katalysator, umfassend mindestens einen erfindungsgemäßen Katalysator A der Struktur Q⁺X⁻ | 0,01 bis 10 |
| Schaumstabilisator, bevorzugt Polyethersiloxan | 0 bis 5 |
| Wasser | 0 bis 20 |
| Physikalisches Treibmittel | 0 bis 50 |
| Weitere Additive | 0 bis 300 |
| Isocyanat-Index | 30 bis 1000 |

Ein weiterer Gegenstand der Erfindung ist ein PU-Schaumstoff, insbesondere PU-Hartschaumstoff, hergestellt gemäß dem erfindungsgemäßen Verfahren.

Ein weiterer Gegenstand der Erfindung ist die Verwendung von erfindungsgemäßem PU-Schaumstoff, wie zuvor genannt, als Kühlschrankisolierung, als Konstruktionswerkstoff, vorzugsweise als Dämmplatte, Sandwichelement, Sprühschaum, 1- & 1,5-Komponenten-Dosenschaum, als Rohrisolation, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel, Kleber oder Beschichtung oder zur Herstellung entsprechender Produkte.

Die Erfindung wurde somit bereits ausführlich beschrieben und die Herstellung von PU, insbesondere PU-Schäumen unter Einsatz zumindest einer Polyol-Komponente und zumindest eine Polyisocyanat-Komponente ist dem Fachmann geläufig. Erfindungsgemäß kommt dabei mindestens ein Katalysator A zum Einsatz wie zuvor beschrieben.

Gemäß einer besonders bevorzugten Ausführungsform der Erfindung enthält die erfindungsgemäße Zusammensetzung insbesondere die folgenden Bestandteile:
Polyol-Komponente:
a) Polyisocyanat-Komponente (Mindestens ein Polyisocyanat und/oder PolyisocyanatPrepolymer)
b) Katalysator, der die Reaktion von Isocyanat-Gruppen mit OH-, NH-, oder anderen isocyanat-reaktiven Gruppen und/oder die Reaktion von Isocyanat-Gruppen untereinander katalysiert, umfassend mindestens ein Katalysator A
c) Optional Schaumstabilisator
d) Optional Treibmittel
e) Optional weitere Additive.

Als Polyol-Komponente (a) werden eine oder mehrere organische Verbindungen mit OH-Gruppen, SH-Gruppen, NH-Gruppen und/oder NH₂-Gruppen, mit einer Funktionalität von 1,8 bis 8 eingesetzt. Dabei umfasst die Polyol-Komponente mindestens eine organische Verbindung mit mindestens zwei Isocyanat-reaktiven Gruppen, ausgewählt aus OH-Gruppen, SH-Gruppen, NH-Gruppen und/oder NH₂-Gruppen, insbesondere OH-Gruppen.

Eine Funktionalität, die keine ganze Zahl ist, also z.B. 1,8, kann sich dadurch ergeben, dass mindestens eine Verbindung mit einer höheren Funktionalität z.B. größer oder gleich 2, mit mindestens einer Verbindung mit einer Funktionalität von z.B. 1 gemischt wird. Dies kann insbesondere geschehen, wenn ein Polyisocyanat-Komponente (b) mit einer Funktionalität größer 2 oder zusätzliche Vernetzer als optionale Additive (f) eingesetzt werden.

Entsprechende Verbindungen, die üblicherweise bei der Herstellung von PU eingesetzt werden können, sind dem Fachmann bekannt und beispielsweise beschrieben im "Kunststoffhandbuch, Band 7, Polyurethane", Carl Hanser Verlag, 3. Auflage 1993, Kapitel 3.1. Üblicherweise kommen Verbindungen mit OH-Zahlen im Bereich von 10 bis 1200 mg KOH/g zum Einsatz.

Besonders bevorzugte Verbindungen sind alle zur Herstellung von Polyurethansystemen, insbesondere Polyurethanschaumstoffen üblicherweise verwendeten Polyetherpolyole und Polyesterpolyole.

Zudem können Polyetherpolycarbonatpolyole, auf natürlichen Ölen basierende Polyole (Natural oil based polyols, NOPs; beschrieben in WO 2005/033167, US 2006/0293400, WO 2006/094227, WO 2004/096882, US 2002/0103091, WO 2006/116456, EP 1678232), Füllkörperpolyole, prepolymerbasierte Polyole und/oder Recyclingpolyole eingesetzt werden.

Recyclingpolyole sind Polyole, die aus dem chemischen Recycling, zum Beispiel durch Solvolyse, wie beispielsweise Glykolyse, Hydrolyse, Acidolyse oder Aminolyse, von Polyurethanen erhalten werden. Der Einsatz von Recyclingpolyolen stellt eine besonders bevorzugte Ausführungsform der Erfindung dar.

Als Polyisocyanat-Komponente (b) werden im Allgemeinen ein oder mehrere Polyisocyanate mit zwei oder mehr Isocyanat-Gruppen eingesetzt. Geeignete Polyisocyanate im Sinne dieser Erfindung sind alle organischen Isocyanate mit zwei oder mehr Isocyanat-Gruppen, insbesondere die an sich bekannten aliphatischen, cycloaliphatischen, arylaliphatischen und vorzugsweise aromatischen mehrwertigen Isocyanate.

Beispielhaft genannt werden können hier Alkylendiisocyanate mit 4 bis 12 Kohlenstoffatomen im Alkylenrest, wie 1,12-Dodecandiisocyanat, 2-Ethyl-tetramethylen-1,4-diisocyanat, 2-Methyl-pentamethylen-1,5-diisocyanat, Tetramethylen-1,4-diisocyanat, Pentamethylendiisocyanat (PDI) und vorzugsweise Hexamethylen-1,6-diisocyanat (HMDI), cycloaliphatische Diisocyanate, wie Cyclohexan-1,3- und -1-4-diisocyanat sowie die entsprechenden Isomerengemische, 4,4'-Methylendicyclohexyldiisocyanat (H12MDI), Isophorondiisocyanat (IPDI), 2,4- und 2,6-Methylcyclohexyldiisocyanat sowie die entsprechenden Isomerengemische und vorzugsweise aromatische Di- und Polyisocyanate, wie 2,4- und 2,6-Toluoldiisocyanat (TDI) sowie die entsprechenden Isomerengemische, Naphthylendiisocyanat, Diethyltoluoldiisocyanat, 4,4'- oder 2,2'- oder 2,4'-Diphenylmethandiisocyanat (MDI) und Polymethylen-polyphenyl-polyisocyanat (PMDI, "polymeres MDI"). Die organischen Polyisocyanate können einzeln oder in Form ihrer Mischungen eingesetzt werden. Ebenso können entsprechende "Oligomere" der Diisocyanate eingesetzt werden, wie z.B. das IPDI-Trimer auf Basis des Isocyanurates, Biurete oder Urethdione. Des Weiteren ist der Einsatz von Prepolymeren auf Basis der oben genannten Isocyanate möglich. Besonders geeignet ist das als "polymeres MDI" (auch als "crude MDI" oder "Roh-MDI" bezeichnet) bekannte Gemisch aus MDI und höher kondensierten Analoga mit einer mittleren Funktionalität von 2 bis 4, sowie die verschiedenen Isomere des TDI in reiner Form oder als Isomerengemisch. Es ist auch möglich, Isocyanate einzusetzen, die durch den Einbau von Urethan-, Uretdion-, Isocyanurat-, Allophanat- und anderen Gruppen modifiziert wurden, sogenannte modifizierte Isocyanate. Beispiele für besonders geeignete Isocyanate sind auch z.B. in EP 1712578, EP 1161474, WO 00/58383, US 2007/0072951, EP 1678232 und der WO 2005/085310 aufgeführt, auf die hier in vollem Umfang Bezug genommen wird.

Ein bevorzugtes Verhältnis von Polyisocyanat-Komponente und Polyol-Komponente, ausgedrückt als Index der Formulierung, d.h. als stöchiometrisches Verhältnis von Isocyanat-Gruppen gegenüber Isocyanat reaktiven Gruppen (z.B. OH-Gruppen, NH-Gruppen) multipliziert mit 100, liegt im Bereich von 10 bis 1000, bevorzugt 40 bis 400. Ein Index von 100 steht für ein molares Verhältnis der reaktiven Gruppen von 1 zu 1.

Geeignete Katalysatoren (c), die für die Herstellung von Polyurethanen, insbesondere PU-Schäumen, einsetzbar sind, sind dem Fachmann aus dem Stand der Technik prinzipiell bekannt.

Dabei sind im Allgemeinen alle Verbindungen einsetzbar, die in der Lage sind, die Reaktion von Isocyanat-Gruppen mit OH-, NH-, oder anderen isocyanat-reaktiven Gruppen, sowie die Reaktion von Isocyanat-Gruppen untereinander zu katalysieren.

Erfindungsgemäß kommt dabei mindestens ein Katalysator A zum Einsatz wie zuvor beschrieben.

Daneben kann gewünschtenfalls zusätzlich auf die üblichen aus dem Stand der Technik bekannten Katalysatoren zurückgegriffen werden, umfassend z.B. Amine (Cyclische, acyclische; Monoamine, Diamine, Oligomere mit einer oder mehreren Aminogruppen), Ammonium-Verbindungen, metallorganische Verbindungen und/oder Metallsalze, vorzugsweise die des Zinn, Eisen, Bismut, Kalium und/oder Zink. Insbesondere können als Katalysatoren Gemische mehrerer solcher Verbindungen eingesetzt werden, welche mindestens einen erfindungsgemäßen Katalysator A enthalten.

Schaumstabilisatoren (d) und deren Einsatz bei der Herstellung von PU-Schäumen sind dem Fachmann bekannt. Als Schaumstabilisatoren können insbesondere oberflächenaktive Verbindungen (Tenside) eingesetzt werden. Der Einsatz von Schaumstabilisatoren ist optional. Bevorzugt werden Schaumstabilisatoren bei der Herstellung von PU-Schäumen eingesetzt. Sie können dazu dienen, die gewünschte Zellstruktur und den Verschäumungsprozess zu optimieren. Es können im Rahmen dieser Erfindung insbesondere eine oder mehrere der bekannten Si-haltigen Verbindungen eingesetzt werden, die die Schaumherstellung unterstützen (Stabilisierung, Zellregulierung, Zellöffnung, etc.). Diese Verbindungen sind aus dem Stand der Technik hinreichend bekannt. Besonders bevorzugt kann mindestens ein Schaumstabilisator auf Basis eines Polyethersiloxans eingesetzt werden. Entsprechende, im Sinne dieser Erfindung einsetzbare Siloxanstrukturen werden z.B. in den folgenden Patentschriften beschrieben, wobei die Verwendung allerdings nur in klassischen PU-Schäumen (z.B. als Formschaum, Matratze, Isolationsmaterial, Bauschaum, etc.) beschrieben ist: CN 103665385, CN 103657518, CN 103055759, CN 103044687, US 2008/0125503, US 2015/0057384, EP 1520870 A1, EP 1211279, EP 0867464, EP 0867465, EP 0275563. Neben oberflächenaktiven Si-haltigen Verbindungen, können auch Si-freie Tenside eingesetzt werden. So wird beispielsweise in EP2295485 A1 die Verwendung von Lecithin und in US 3746663 die Verwendung von Vinylpyrrolidon-basierten Strukturen als Schaumstabilisator zur Herstellung von PU-Hartschaum beschrieben. Weitere Si-freie Schaumstabilisatoren sind beispielsweise in EP 2511328 B1, DE 1020011007479 A1, DE 3724716 C1, EP 0734404, EP 1985642, DE 2244350 und US 5236961 beschrieben.

Treibmittel (e) und deren Einsatz bei der Herstellung von PU-Schäumen sind dem Fachmann bekannt. Der Einsatz von Treibmittel(n) ist optional. Die Verwendung von einem oder einer Kombination aus mehreren Treibmitteln (e) ist grundsätzlich abhängig von der Art des verwendeten Verschäumungsverfahrens, der Art des Systems und der Anwendung des erhaltenen PU-Schaums. Es können chemische und/oder physikalische Treibmittel als auch eine Kombination aus beiden verwendet werden. Je nach Menge des verwendeten Treibmittels wird ein Schaum mit hoher oder niedriger Dichte hergestellt. So können Schäume mit Dichten von 5 kg/m³ bis 900 kg/m³, bevorzugt 5 bis 350, besonders bevorzugt 8 bis 200 kg/m³, insbesondere 8 bis 150 kg/m³ hergestellt werden.

Als physikalische Treibmittel können eine oder mehrere der entsprechenden Verbindungen mit passenden Siedepunkten sowie deren Mischungen, wie z.B. Kohlenwasserstoffe mit 3, 4 oder 5 Kohlenstoffatomen, bevorzugt cyclo-, iso-, n-Pentan, Fluorkohlenwasserstoffe (HFC), bevorzugt HFC 245fa, HFC 134a oder HFC 365mfc, Fluorchlorkohlenwasserstoffe (HCFC), bevorzugt HCFC 141b, Hydrofluoroolefine (HFO) oder Hydrohaloolefine, bevorzugt 1234ze, 1234yf, 1224yd, 1233zd(E) oder 1336mzz, Ester, bevorzugt Methylformiat, Ketone, bevorzugt Aceton, Ether bevorzugt, Dimethoxymethan, oder Chlorkohlenwasserstoffe, bevorzugt Dichlormethan oder 1,2-Dichlorethan eingesetzt werden.

Als chemische Treibmittel können eine oder mehrere Verbindungen eingesetzt werden, die mit NCO-Gruppen unter Freisetzung von Gasen reagieren, wie z.B. Wasser oder Ameisensäure oder durch den Temperaturanstieg während der Reaktion Gase freisetzen wie z.B. Natriumhydrogencarbonat.

Es entspricht einer besonders bevorzugten Ausführungsform der Erfindung, wenn die erfindungsgemäße Zusammensetzung als Treibmittel Wasser in Kombination mit Kohlenwasserstoffen mit 5 Kohlenstoffatomen, HFO, Hydrohaloolefine oder HFC oder Mischungen davon enthält.

Als optionale Additive (f) können ein oder mehrere der nach dem Stand der Technik bekannten Substanzen verwendet werden, die bei der Herstellung von Polyurethanen, insbesondere von PU-Schäumen, Verwendung finden, wie zum Beispiel Vernetzer, Kettenverlängerer, Stabilisatoren gegen oxidativen Abbau (sogenannte Antioxidantien), Flammschutzmittel, Biozide, zellverfeinernde Additive, Nukleierungsmittel, Zellöffner, feste Füllstoffe, Antistatik-Additive, Verdicker, Farbstoffe, Pigmente, Farbpasten, Duftstoffe und/oder Emulgatoren, usw.

Als optionales Flammschutzmittel kann die erfindungsgemäße Zusammensetzung eines oder mehrere der bekannten und zur Herstellung von PU geeigneten Flammschutzmittel wie z.B. halogenhaltige oder halogenfreie organische phosphorhaltige Verbindungen, wie z.B. Triethylphosphat (TEP), Tris(1-chlor-2-propyl)phosphat (TCPP), Tris(2-chlorethyl)phosphat (TCEP), Dimethylmethanphosphonat (DMMP), Dimethylpropanphosphonat (DMPP), Ammoniumpolyphosphat oder roter Phosphor, stickstoffhaltige Verbindungen wie z.B. Melamin, Melamincyanurat oder Melaminpolyphosphat oder halogenierte Verbindungen, wie z.B. chlorierte und/oder bromierte Polyether- und/oder Polyesterpolyole enthalten. Es können auch Mischungen von verschiedenen Flammschutzmitteln eingesetzt werden.

Das erfindungsgemäße Verfahren zur Herstellung von PU-Schäumen kann nach allen bekannten Methoden durchgeführt werden, z.B. im Handmischverfahren oder bevorzugt mit Hilfe von Verschäumungsmaschinen. Wird das Verfahren mittels Verschäumungsmaschinen durchgeführt, können Hochdruck- oder Niederdruckmaschinen verwendet werden. Das erfindungsgemäße Verfahren kann sowohl diskontinuierlich als auch kontinuierlich durchgeführt werden und es können z.B. 1K, 1.5K oder 2K Systeme wie in EP3717538 A1, US7776934 B2, EP1400547 B1 oder EP2780384 B2 beschrieben, verwendet werden.

Die erfindungsgemäßen Gegenstände sind nachfolgend beispielhaft beschrieben, ohne dass die Erfindung, deren Anwendungsbreite sich aus der gesamten Beschreibung und den Ansprüchen ergibt, auf diese beispielhaften Ausführungsformen beschränkt sein soll.

Sind Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden Mittelwerte angegeben, so handelt es sich, wenn nicht anderes angegeben, um Zahlenmittel. Werden Parameter angegeben, die durch Messung bestimmt wurden, so wurden die Messungen, wenn nicht anders angegeben, bei einer Temperatur von 23 °C und Normaldruck durchgeführt.

### Beispiele:

Die Herstellung der in den Beispielen gezeigten erfindungsgemäßen Katalysatoren A ist dem Fachmann bekannt und beispielsweise in EP3257843A1, EP2638123B1 oder DE102016210481B3 beschrieben.

Für den anwendungstechnischen Vergleich wurden die in Tabelle 2 und 3 dargestellten Formulierungen verwendet (Angaben in Gewichtsteilen). Die Durchführung der Vergleichsverschäumungen erfolgte im Handmischverfahren. Dazu wurden Polyol-Komponente, Flammschutzmittel, Katalysatoren, Wasser, Schaumstabilisator und physikalisches Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Jetzt wurde das pMDI zugegeben, die Mischung mit dem beschriebenen Rührer 5 s bei 3000 Upm verrührt und sofort in eine offene Form von 27,5 x 14 x 14 cm Größe (B x H x T) überführt. Cremezeit, Gelzeit und Steigzeit wurden mittels Stoppuhr und Klebfreizeit mittels Stoppuhr und Holzspatel bestimmt. Nach 10 min wurden die Schaumstoffe entformt. Einen Tag nach der Verschäumung wurden die Schaumstoffe analysiert. Die Feinzelligkeit und die Schaumdefekte wurden subjektiv anhand einer Skala von 1 bis 10 beurteilt, wobei 10 eine (idealisierten) feinzelligen, ungestörten Schaum und 1 einen grobzelligen, extrem stark gestörten Schaum repräsentiert. Als Schaumstabilisatoren wurden TEGOSTAB^{®} B 84711 und TEGOSTAB^{®} B 8871 eingesetzt. Als Amin-Katalysatoren wurden POLYCAT^{®} 206 und POLYCAT^{®} 5 eingesetzt.

Als erfindungsgemäße Katalysatoren wurden Verbindung (A) 1,3-Dimethylimidazoliumacetat, (B) 1,3-Dimethylimidazoliumpropionat, (C) 1-Ethyl-3-methylimidazoliumacetat und (D) 1-Ethyl-3-methylimidazoliumpropionat verwendet.

Als Referenzen für die erfindungsgemäßen Katalysatoren wurde DABCO^{®} TMR 7, KOSMOS^{®} 70 LO und KOSMOS^{®} 33 als Trimerisierungskatalysatoren verwendet.

**Tabelle 2**

| **Komponente** | **PU 1** | **PU 2** | **PU 3** | **PU 4** | **PU 5** | **PU 6** |
|---|---|---|---|---|---|---|
| Polyesterpolyol* | 100 | 100 | 100 | 100 | 100 | 100 |
| TEGOSTAB^{®} B 84711 | 2 | 2 | 2 | 2 | 2 | 2 |
| POLYCAT^{®} 206 | 0,4 | 0,4 | 0,4 | 0,4 | 0,4 | 0,4 |
| Wasser | 2 | 2 | 2 | 2 | 2 | 2 |
| TCPP | 20 | 20 | 20 | 20 | 20 | 20 |
| HFO 1233zd | 35 | 35 | 35 | 35 | 35 | 35 |
| DABCOO TMR 7 | 3 | | | | | |
| KOSMOS^{®} 70LO | | 3 | | | | |
| Verbindung A | | | 3 | | | |
| Verbindung B | | | | 3 | | |
| Verbindung C | | | | | 3 | |
| Verbindung D | | | | | | 3 |
| pMDI** | 305 | 293 | 287 | 287 | 287 | 287 |

**Tabelle 3**

| **Komponente** | **PU 7** | **PU 8** | **PU 9** | **PU 10** | **PU 11** |
|---|---|---|---|---|---|
| Polyesterpolyol*** | 100 | 100 | 100 | 100 | 100 |
| TEGOSTAB^{®} B 8871 | 2 | 2 | 2 | 2 | 2 |
| POLYCAT^{®} 5 | 0,4 | 0,4 | 0,4 | 0,4 | 0,4 |
| Wasser | 0,4 | 0,4 | 0,4 | 0,4 | 0,4 |
| TCPP | 15 | 15 | 15 | 15 | 15 |
| Cyclopentan | 20 | 20 | 20 | 20 | 20 |
| KOSMOS^{®} 33 | 3,5 | | | | |
| Verbindung A | | 3,5 | | | |
| Verbindung B | | | 3,5 | | |
| Verbindung C | | | | 3,5 | |
| Verbindung D | | | | | 3,5 |
| pMDI** | 213 | 213 | 213 | 213 | 213 |

| | | | | | |
|---|---|---|---|---|---|
| * Diethylenglycol-Phthalsäureanhydrid basiertes Polyesterpolyol mit Hydroxylzahl 300 mg KOH/g ** Polymeres MDI, 200 mPa*s, 31,5% NCO, Funktionalität 2,7. *** Diethylenglycol-Phthalsäureanhydrid basiertes Polyesterpolyol mit Hydroxylzahl 240 mg KOH/g | | | | | |

**Tabelle 4**

| **Eigenschaften** | **PU 1** | **PU 2** | **PU 3** | **PU 4** | **PU 5** | **PU 6** | **PU 7** | **PU 8** | **PU 9** | **PU 10** | **PU 11** |
|---|---|---|---|---|---|---|---|---|---|---|---|
| Creme-Zeit (s) | 16 | 14 | 14 | 12 | 14 | 15 | 16 | 15 | 16 | 15 | 17 |
| Gelzeit (s) | 92 | 92 | 75 | 71 | 87 | 84 | 27 | 23 | 21 | 26 | 25 |
| Steigzeit (s) | 104 | 101 | 93 | 90 | 98 | 97 | 40 | 36 | 34 | 38 | 37 |
| Klebfreizeit (s) | 248 | 323 | 167 | 173 | 193 | 185 | 32 | 39 | 41 | 43 | 43 |
| Dichte (kg/m³) | 29,2 | 27,9 | 30,6 | 31,4 | 31,0 | 32,1 | 33,9 | 34,7 | 35,2 | 34,2 | 34,9 |
| Schaumdefekte | 5,0 | 5,5 | 5,5 | 5,0 | 5,5 | 5,5 | 6,5 | 6,0 | 6,5 | 6,0 | 6,5 |
| Feinzelligkeit | 6,5 | 7,0 | 6,5 | 6,0 | 7,0 | 6,5 | 7,5 | 7,5 | 8,0 | 7,0 | 7,5 |

Die Ergebnisse in Tabelle 4 zeigen, dass mit Schäumen, basierend auf der erfindungsgemäßen Zusammensetzung und den erfindungsgemäßen Katalysatoren, Reaktionszeiten, Dichten und Schaumstrukturen erzielt werden können, die auf dem gleichen Niveau wie mit herkömmlichen Trimerisierungskatalysatoren hergestellte Schäume liegen. Alle anderen für den Gebrauch relevanten Schaumeigenschaften werden durch die erfindungsgemäßen Katalysatoren nicht oder nur unwesentlich beeinflusst.

## Patentansprüche

1. Zusammensetzung zur Herstellung von Polyurethanen, umfassend zumindest eine Polyol-Komponente, zumindest eine Polyisocyanat-Komponente, optional zumindest ein Treibmittel, optional zumindest einen Schaumstabilisator, **dadurch gekennzeichnet, dass** die Zusammensetzung mindestens einen Katalysator A der Struktur Q⁺X⁻ enthält, wobei Q⁺ ein Imidazoliumkation nach Formel (1), bevorzugt ein Dialkylimidazoliumkation, besonders bevorzugt ein 1,3- Dialkylimidazoliumkation ist, 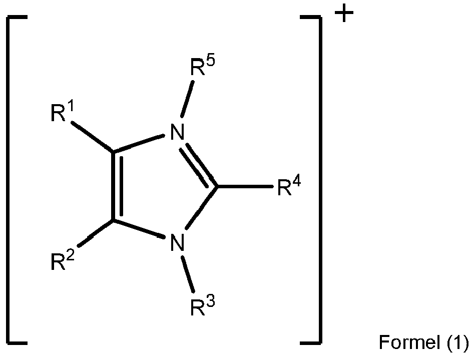 mit
R¹, R², R⁴, unabhängig voneinander, Wasserstoff oder ein Alkylrest mit 1 bis 6 Kohlenstoffen, bevorzugt Wasserstoff, Methyl oder Ethyl, besonders bevorzugt Wasserstoff,
R³, R⁵, unabhängig voneinander, ein Alkylrest mit 1 bis 6 Kohlenstoffen, bevorzugt Methyl oder Ethyl,
wobei X⁻ ein Alkylcarboxylat der Struktur R⁶COO⁻ ist, mit
R⁶ Wasserstoff oder ein linearer oder verzweigter Alkylrest mit 1 bis 16 Kohlenstoffatomen, besonders bevorzugt 1 bis 8 Kohlenstoffen.

2. Zusammensetzung gemäß Anspruch 1, **dadurch gekennzeichnet, dass** Q⁺ ein 1,3-Dimethylimidazolium-Kation oder ein 1-Ethyl-3-methylimidazolium-Kation ist.

3. Zusammensetzung gemäß einem der Ansprüche 1 oder 2, **dadurch gekennzeichnet, dass** X⁻das Anion der Ameisensäure, der Essigsäure, der Propionsäure, der Pivalinsäure, der2-Ethylhexansäure oder der Neodekansäure ist.

4. Zusammensetzung gemäß einem der Ansprüche 1 bis 3, **dadurch gekennzeichnet, dass** ein oder mehrere Katalysatoren A in einer Gesamtmenge von 0,01 bis 10 Gewichtsteilen, bevorzugt 0,1 bis 8 Gewichtsteilen, bezogen auf 100 Gewichtsteile der gesamten Polyol-Komponente enthalten sind.

5. Zusammensetzung gemäß einem der Ansprüche 1 bis 4, **dadurch gekennzeichnet, dass** es sich bei dem Polyurethan um einen Polyurethan-Schaum handelt.

6. Zusammensetzung gemäß einem der Ansprüche 1 bis 5, **dadurch gekennzeichnet, dass** es sich bei dem Polyurethan-Schaum um einen Polyurethan-Hartschaum handelt.

7. Zusammensetzung gemäß einem der Ansprüche 1 bis 6, **dadurch gekennzeichnet, dass** sie zumindest ein physikalisches Treibmittel enthält, vorzugsweise ausgewählt aus der Gruppe bestehend aus Dimethoxymethan, Methylformiat, HFC-245fa, 1233zd, 1336mzz, Cyclopentan, Isopentan und n-Pentan, besonders bevorzugt ausgewählt aus der Gruppe bestehend aus HFC-245fa, 1233zd, Cyclopentan, Isopentan und n-Pentan.

8. Zusammensetzung gemäß einem der Ansprüche 1 bis 7, **dadurch gekennzeichnet, dass** ein oder mehrere Schaumstabilisatoren, insbesondere auf Basis eines Polyethersiloxans, in Mengen von 0,1 bis 4 Gewichtsteilen, bezogen auf 100 Gewichtsteile der gesamten Polyol-Komponente enthalten sind.

9. Verfahren zur Herstellung von Polyurethan auf der Basis einer Reaktionsmischung enthaltend eine Zusammensetzung wie in einem der Ansprüche 1 bis 8 definiert.

10. Verfahren gemäß Anspruch 9, **dadurch gekennzeichnet, dass** es sich bei der Reaktionsmischung um eine schaumfähige Reaktionsmischung und bei dem Polyurethan um einen Polyurethanschaum, insbesondere einen Polyurethanhartschaum handelt.

11. PU-Schaumstoff, insbesondere PU-Hartschaumstoff, hergestellt gemäß dem Verfahren nach Anspruch 10.

12. Verwendung von PU- Schaumstoff gemäß Anspruch 11 als Kühlschrankisolierung, als Konstruktionswerkstoff, vorzugsweise als Dämmplatte, Sandwichelement, Sprühschaum, 1-& 1,5-Komponenten-Dosenschaum, als Rohrisolation, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel, Kleber oder Beschichtung oder zur Herstellung entsprechender Produkte.
